# EUROPEAN PATENT SPECIFICATION

(11) **EP 4 006 117 B1**
(45) Date of publication and mention of the grant of the patent: **26.07.2023**
(21) Application number: 20871526.8
(22) Date of filing: 29.09.2020
(51) Int. Cl.: C09J 133/08, C09J 7/38, C08F 2/24, C08F 220/18, C08F 220/06, C08F 218/08, C08F 216/06, C08F 212/08, C08F 8/12, C09D 133/08

(54) **ACRYLIC EMULSION PRESSURE-SENSITIVE ADHESIVE COMPOSITION**
DRUCKEMPFINDLICHE HAFTKLEBEZUSAMMENSETZUNG AUS ACRYLEMULSION
COMPOSITION ADHÉSIVE SENSIBLE À LA PRESSION EN ÉMULSION ACRYLIQUE

(30) Priority: 30.09.2019 KR 20190121183
(43) Date of publication of application: 01.06.2022
(73) Proprietor: LG Chem, Ltd., Seoul 07336 (KR)
(72) Inventor: HAN, Hye Soo, Daejeon 34122 (KR); YANG, Seung Hun, Daejeon 34122 (KR); CHO, Hyunju, Daejeon 34122 (KR); LEE, Kumhyoung, Daejeon 34122 (KR); PARK, Keu Yeun, Daejeon 34122 (KR); LEE, Seungmo, Daejeon 34122 (KR); SEO, Sungjong, Daejeon 34122 (KR); YEO, Jungeun, Daejeon 34122 (KR)
(74) Representative: Goddar, Heinz J.
(86) International application number: PCT/KR2020/013387
(87) International publication number: WO 2021/066553

(56) References cited:
- CN-A- 108 285 508
- JP-A- 2018 515 639
- KR-A- 20090 081 001
- KR-A- 20180 106 738
- KR-A- 20180 121 781
- KR-A- 20190 104 805
- US-A- 4 150 005
- US-A1- 2019 218 433
- US-B1- 6 927 267

## Description

### Field of the Invention

The present invention relates to an acrylic emulsion pressure-sensitive adhesive composition.

### BACKGROUND OF THE INVENTION

### Description of the Related Art

Pressure-sensitive adhesives (PSAs) are materials that adhere to an adherend under a slight pressure. PSAs are viscoelastic materials, different from adhesives, have basic properties such as initial tack, tack, and cohesiveness, and are used in various industries such as printing, chemistry, medical products, household electric appliances, vehicles, stationery, and the like.

Among them, adhesive labels commonly referred to as labels or label stickers are used in most industrial fields such as printing, chemistry, medical products, cosmetics, food industry, household electric appliances, vehicles, stationery, etc. as well as for product trademarks and advertisements. Generally, as a material of an adherend with which an adhesive label is attached, paper such as art paper, imitation paper, mirror paper, gold and silver paper, heat sensitive paper, kraft paper, fluorescent paper, sterilized paper, photographic paper, etc., and polymer films such as PET, PVC, PE, PP, PS, PI, etc. are used, and are usually applied to final products through regular printing on the surface.

For the pressure-sensitive adhesive used for such adhesive labels, its tack is determined depending on its application.

For example, a permanent pressure-sensitive adhesive exhibits a strong tack of about 8 N/inch or more, based on 180 degree peel strength using a standard adherend. However, when paper is used as an adherend, adherend breakage occurs at the time of removal.

On the other hand, a removable pressure-sensitive adhesive exhibits a tack of about 5 N/inch to about 8 N/inch, based on 180 degree peel strength using a standard adherend, and if necessary, it shows a tack at a level that allows removal, and it is mostly used for applications that temporarily adhere labels.

Recently, due to an environmental pollution issue related to plastics, there is an increasing interest in a water-borne removable pressure-sensitive adhesive that is easily removed by adding water, when removing an adhesive label in a process of recycling plastics.

However, a pressure-sensitive adhesive having excellent tacky/adhesive strength to a substrate is not easily removed even during removal, and thus there is a problem in that the water-borne removal efficiency is deteriorated.

Accordingly, there is a need to study a pressure-sensitive adhesive that may be easily peeled off during a water-borne removal process while being able to realize excellent tacky/adhesive strength for a substrate to be adhered. CN 108285508 A discloses an acrylic emulsion pressure-sensitive adhesive composition comprising 2-ethylhexyl acrylate, butyl acrylate, butyl methacrylate, vinyl acetate, 2-hydroxypropyl acrylate and acrylic acid. US 6927267 B1 discloses an acrylic emulsion pressure-sensitive adhesive composition comprising 2-ethylhexyl acrylate, vinyl acetate, 2-hydroxypropyl acrylate styrene and acrylic acid. US 2019218433 A1 discloses an acrylic emulsion pressure-sensitive adhesive composition comprising 2-ethylhexyl acrylate, styrene, vinyl acetate, acrylic acid and poly(ethylene glycol) diacrylate with or without methyl methacrylate.

### SUMMARY OF THE INVENTION

Technical Problem

There is provided an acrylic emulsion pressure-sensitive adhesive composition that may become easily removable after being impregnated with water while being able to realize excellent tacky/adhesive strength for a substrate to be adhered.

### Technical Solution

There is provided an acrylic emulsion pressure-sensitive adhesive composition including emulsion polymer particles (A) including a1) a first repeating unit derived from an alkyl (meth)acrylate-based monomer, a2) a second repeating unit derived from an unsaturated carboxylic acid-based monomer, a3) a third repeating unit derived from vinyl acetate, and a4) a fourth repeating unit represented by the following Chemical Formula 1:

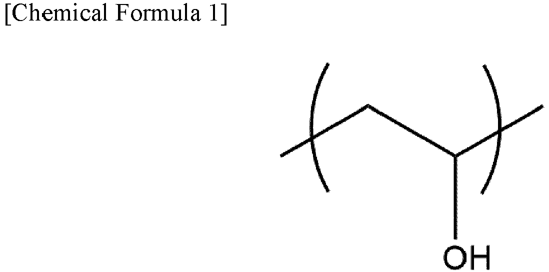

The alkyl (meth)acrylate-based monomer may include one or more selected from the group consisting of methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, dodecyl (meth)acrylate, isobornyl (meth)acrylate, and lauryl (meth)acrylate.

Further, the unsaturated carboxylic acid-based monomer may include one or more selected from the group consisting of acrylic acid, methacrylic acid, fumaric acid, maleic acid, itaconic acid, citraconic acid, mesaconic acid, glutaconic acid, and allylmalonic acid.

Further, the acrylic emulsion pressure-sensitive adhesive composition may include about 0.1 parts by weight to about 10 parts by weight, or about 0.5 parts by weight to about 5 parts by weight, or about 1 parts by weight to about 3 parts by weight of the second repeating unit with respect to 100 parts by weight of the first repeating unit.

Further, the acrylic emulsion pressure-sensitive adhesive composition may include about 1 parts by weight to about 30 parts by weight, or about 1 parts by weight to about 25 parts by weight, or about 3 parts by weight to about 25 parts by weight of the third repeating unit with respect to 100 parts by weight of the first repeating unit.

Further, the acrylic emulsion pressure-sensitive adhesive composition may include about 0.1 parts by weight to about 5 parts by weight, or about 0.3 parts by weight to about 3 parts by weight, or about 0.4 parts by weight to about 1.5 parts by weight of the fourth repeating unit with respect to 100 parts by weight of the first repeating unit.

The emulsion polymer particles (A) may further include a fifth repeating unit derived from any one or more monomers of a hydroxy alkyl (meth)acrylate-based monomer and an aromatic vinylic monomer.

In this regard, the hydroxy alkyl (meth)acrylate-based monomer may include one or more selected from the group consisting of hydroxyethyl (meth)acrylate, hydroxypropyl (meth)acrylate, and hydroxybutyl (meth)acrylate.

Further, the aromatic vinylic monomer may include one or more selected from the group consisting of styrene, methylstyrene, ethylstyrene, butylstyrene, chlorostyrene, methyl vinyl benzoate, vinylnaphthalene, chloromethylstyrene, and divinylbenzene.

According to one exemplary embodiment of the present invention, the acrylic emulsion pressure-sensitive adhesive composition may include 4000 ppm or more, or about 4000 ppm to about 18000 ppm, or about 5000 ppm to about 15000 ppm, or about 5000 ppm to about 13000 ppm of acetic acid with respect to the weight of the emulsion polymer particles (A).

According to another aspect of the present invention, there is provided an adhesive member including a substrate; and an adhesive layer which is formed on at least one surface of the substrate, wherein the adhesive layer is formed by the acrylic emulsion pressure-sensitive adhesive composition.

In this regard, the adhesive member may have a 90 degree peel strength of about 500 gf/in or more, or about 500 gf/in to about 1000 gf/in, or about 500 gf/in to about 750 gf/in with respect to SUS surface, as measured according to FINAT Test Method No.2 (FTM 2) standard, and may have a 90 degree peel strength of less than 250 gf/in, or about 100 gf/in to about 250 gf/in with respect to SUS surface, as measured according to FINAT Test Method No.2 (FTM 2) standard, after being impregnated with water.

Further, the adhesive member may have a 90 degree peel strength of about 250 gf/in or more, or about 250 gf/in to about 400 gf/in, or about 250 gf/in to about 350 gf/in with respect to HDPE surface, as measured according to FINAT Test Method No.2 (FTM 2) standard, and may have a 90 degree peel strength of less than about 130 gf/in, or about 50 gf/in to about 130 gf/in, or about 60 gf/in to about 120 gf/in with respect to HDPE surface, as measured according to FINAT Test Method No.2 (FTM 2) standard, after being impregnated with water.

Meanwhile, according to still another aspect of the present invention, there is provided a method of preparing an acrylic emulsion pressure-sensitive adhesive composition, the method including the steps of forming emulsion polymer particles (A) by performing emulsion polymerization of a monomer mixture including a1) an alkyl (meth)acrylate-based monomer, a2) an unsaturated carboxylic acid-based monomer, and a3) a vinyl acetate in the presence of an emulsifier; and hydrolyzing vinyl acetate-derived residues by leaving the emulsion polymer particles under acidic or basic conditions.

In the present invention, the terms "the first", "the second", and the like are used to describe a variety of components, and these terms are merely employed to differentiate a certain component from other components.

Further, the terms used in this description are just for explaining exemplary embodiments and it is not intended to restrict the present invention.

The singular expression may include the plural expression unless it is differently expressed contextually.

It must be understood that the term "include", "equip", or "have" in the present description is only used for designating the existence of characteristics taken effect, numbers, steps, components, or combinations thereof, and do not exclude the possibility of addition of one or more different characteristics, numbers, steps, components or combinations thereof beforehand.

Further, in the present specification, when a layer or an element is mentioned to be formed "on" or "above" layers or elements, it means that each layer or element is directly formed on the layers or elements, or other layers or elements may be formed between the layers, subjects, or substrates.

While the present invention is susceptible to various modifications and alternative forms, specific embodiments will be illustrated and described in detail as follows.

Hereinafter, the present invention will be described in detail.

The present disclosure provides an acrylic emulsion pressure-sensitive adhesive composition including emulsion polymer particles (A) including a1) a first repeating unit derived from an alkyl (meth)acrylate-based monomer, a2) a second repeating unit derived from an unsaturated carboxylic acid-based monomer, a3) a third repeating unit derived from vinyl acetate, and a4) a fourth repeating unit represented by the following Chemical Formula 1:

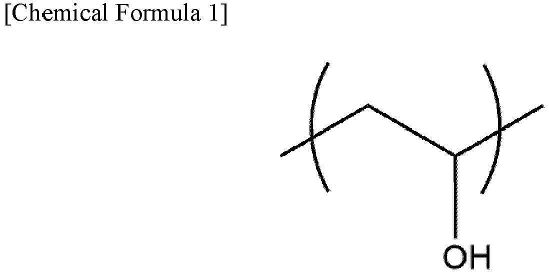

The present inventors found that, with regard to an acrylic emulsion pressure-sensitive adhesive composition including an emulsion of latex particles prepared by emulsion polymerization of an acrylate-based monomer, etc., when particular repeating units are included by combination of particular monomers, it is possible to provide a pressure-sensitive adhesive composition that may become easily removable after being impregnated with water for water-borne removal while having excellent tacky/adhesive strength for a substrate to be adhered, thereby completing the present invention.

First, the acrylic emulsion pressure-sensitive adhesive composition according to one exemplary embodiment of the present invention may include an emulsion polymer of particular monomers, i.e., latex particles, wherein each monomer may exist in the form of a repeating unit derived from the monomer in the latex particles.

### Monomer

First, in the emulsion polymerization for preparing the latex particles, an alkyl (meth)acrylate-based monomer may be used, which may be referred to as a first monomer. Therefore, the latex particles may include a repeating unit derived from the alkyl (meth)acrylate-based monomer, which may be referred to as a first repeating unit.

The alkyl (meth)acrylate-based monomer may include one or more selected from the group consisting of methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, dodecyl (meth)acrylate, isobornyl (meth)acrylate, and lauryl (meth)acrylate, and these compounds may be used alone or in combination of two or more thereof.

Further, in the emulsion polymerization for preparing the latex particles, an unsaturated carboxylic acid-based monomer may be used, which may be referred to as a second monomer. Therefore, the latex particles may include a repeating unit derived from the unsaturated carboxylic acid-based monomer, which may be referred to as a second repeating unit.

Further, the unsaturated carboxylic acid-based monomer may include one or more selected from the group consisting of acrylic acid, methacrylic acid, fumaric acid, maleic acid, itaconic acid, citraconic acid, mesaconic acid, glutaconic acid, and allylmalonic acid.

The acrylic emulsion pressure-sensitive adhesive composition may include about 0.1 parts by weight to about 10 parts by weight, or about 0.5 parts by weight to about 5 parts by weight, or about 1 parts by weight to about 3 parts by weight of the second repeating unit with respect to 100 parts by weight of the first repeating unit. Due to the above-described content range, there are advantages in that the acrylic emulsion pressure-sensitive adhesive composition according to one exemplary embodiment of the present invention may become easily removable upon being impregnated with water for water-borne removal while exhibiting excellent adhesive strength.

Further, in the emulsion polymerization for preparing the latex particles, vinyl acetate may be used, which may be referred to as a third monomer. Therefore, the latex particles may include a repeating unit derived from the vinyl acetate monomer, which may be referred to as a third repeating unit.

The acrylic emulsion pressure-sensitive adhesive composition may include about 1 part by weight to about 30 parts by weight, or about 1 parts by weight to about 25 parts by weight, or about 3 parts by weight to about 25 parts by weight of the third repeating unit with respect to 100 parts by weight of the first repeating unit. Due to the above-described content range, there are advantages in that the acrylic emulsion pressure-sensitive adhesive composition according to one exemplary embodiment of the present invention may become easily removable upon being impregnated with water for water-borne removal while exhibiting excellent adhesive strength.

Further, the latex particles include a fourth repeating unit represented by the following Chemical Formula 1:

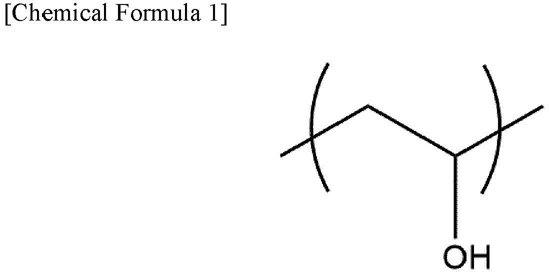

Such a fourth repeating unit may also be derived from hydroxy ethylene, and may also be formed by hydrolyzing an ethylene acetate repeating unit derived from the above-described vinyl acetate by an acid or a base.

When such a fourth repeating unit is derived from hydroxy ethylene, hydroxy ethylene may be referred to as a fourth repeating unit.

The acrylic emulsion pressure-sensitive adhesive composition may include about 0.1 parts by weight to about 5 parts by weight, or about 0.3 parts by weight to about 3 parts by weight, or about 0.4 parts by weight to about 1.5 parts by weight of the fourth repeating unit with respect to 100 parts by weight of the first repeating unit. Due to the above-described content range, there are advantages in that the acrylic emulsion pressure-sensitive adhesive composition according to one exemplary embodiment of the present invention may become easily removable upon being impregnated with water for water-borne removal while exhibiting excellent adhesive strength.

In particular, the fourth repeating unit may impart hydrophilicity to latex particles by including a hydroxy group in the repeating unit, and when the latex particles including this fourth repeating unit are impregnated with water in the process for water-borne removal, they are swollen by water and may be easily peeled off from the member to be adhered.

In addition, in the emulsion polymerization for preparing the latex particles, any one or more of a hydroxy alkyl (meth)acrylate-based monomer and an aromatic vinylic monomer may be further used, which may be referred to as a fifth monomer. Accordingly, the latex particles may include an ethylene acetate repeating unit derived from such a monomer, which may be referred to as a fifth repeating unit.

In this regard, the hydroxy alkyl (meth)acrylate-based monomer may include one or more selected from the group consisting of hydroxyethyl (meth)acrylate, hydroxypropyl (meth)acrylate, and hydroxybutyl (meth)acrylate.

Further, the aromatic vinylic monomer may include one or more selected from the group consisting of styrene, methylstyrene, ethylstyrene, butylstyrene, chlorostyrene, methyl vinyl benzoate, vinylnaphthalene, chloromethylstyrene, and divinylbenzene.

### Emulsion polymerization

The emulsion polymer, i.e., latex particles included in the composition according to one exemplary embodiment of the present invention may be prepared by an emulsion polymerization method including the step of performing emulsion polymerization of a polymerization composition including a monomer mixture including the above-described monomer components, a polymerization initiator, and an emulsifier.

At this time, the polymerization temperature and the polymerization time may be appropriately determined depending on the case. For example, the polymerization temperature may be about 50 °C to about 200 °C, and the polymerization time may be about 0.5 hr to about 20 hr.

The polymerization initiator applicable during the emulsion polymerization may include inorganic or organic peroxides. For example, a water-soluble polymerization initiator including potassium persulfate, sodium persulfate, ammonium persulfate, etc. and an oil-soluble polymerization initiator including cumene hydroperoxide, benzoyl peroxide, etc. may be used.

Further, an activator to promote reaction initiation of peroxide may be further included, together with the polymerization initiator, and the activator may include one or more selected from the group consisting of sodium formaldehyde sulfoxylate, sodium ethylenediaminetetraacetate, ferrous sulfate, and dextrose.

The polymerization initiator may be included in an amount of about 0.1 parts by weight to about 10 parts by weight, and preferably, about 0.1 parts by weight to about 5 parts by weight with respect to 100 parts by weight of the monomer mixture, based on the dry weight.

According to one exemplary embodiment of the present invention, the acrylic emulsion pressure-sensitive adhesive composition may include other additives without particular limitation within a range that does not deteriorate the desired effect of the invention, in addition to the above components.

Specifically, an electrolyte may be further included in order to adjust pH and to impart polymerization stability during the polymerization reaction, and exemplified by sodium hydroxide, sodium bicarbonate, sodium carbonate, sodium phosphate, sodium sulfate, sodium chloride, etc., but is not limited thereto. In addition, these compounds may be used alone or in combination of two or more thereof.

The emulsion polymerization may be specifically performed through the following steps of:
a first step of preparing an emulsion by dispersing an emulsifier in a solvent;
a second step of preparing a pre-emulsion by mixing a monomer mixture including the respective monomer components with the emulsifier; and
a third step of performing an emulsion polymerization by mixing the emulsion of the first step with the pre-emulsion of the second step in the presence of a polymerization initiator.

In a specific embodiment of the present invention, the above-described acrylic emulsion pressure-sensitive adhesive composition may be specifically prepared by the following method, but the present invention is not necessarily limited thereto.

In the first step, the emulsion including the emulsifier is prepared. This step is independent of the following process of preparing the pre-emulsion. As the emulsifier, an anionic emulsifier may be used alone, or an anionic emulsifier, a cationic emulsifier, and the above-described non-ionic emulsifier may be used in combination. These emulsifier components may be mixed with a solvent such as water, etc. to prepare the emulsion.

In the process of preparing the emulsion, micelle primary particles having a size of several nanometers may be stably formed.

The second step is a process of preparing the pre-emulsion including the above-described monomer mixture, wherein the pre-emulsion is prepared by mixing the above-described respective monomers and the emulsifier with water.

At this time, as the emulsifier, an anionic emulsifier may be used alone, or an anionic emulsifier and the above-described non-ionic emulsifier may be used in combination. During this process, nano-sized latex particles may be formed inside the pre-emulsion.

In other words, the above-described emulsifier may be used in any one or more steps of the step of preparing the emulsion and the step of preparing the pre-emulsion.

Further, in the third step, the polymerization initiator is added to the prepared emulsion, and then the pre-emulsion and the polymerization initiator are continuously added at an equal ratio for a predetermined period of time.

In a non-limiting exemplary embodiment of the present invention, the amount of the polymerization initiator added to the emulsion may be about 0 parts by weight to about 1 parts by weight with respect to 100 parts by weight of the monomer mixture, and the amount of the polymerization initiator added together with the pre-emulsion may be about 0.1 parts by weight to about 2 parts by weight by weight with respect to 100 parts by weight of the monomer mixture, and the continuous injection time may be about 3 hr to about 7 hr.

Through this process, the suspending monomers or polymers in the pre-emulsion may enter the primary particles produced in the emulsion.

The resulting products of the reaction may then undergo a heating polymerization process in the presence of an additional polymerization initiator, through which the remaining monomers are polymerized.

At this time, the polymerization initiator may be further added in an amount of about 0.1 parts by weight to about 10 parts by weight with respect to 100 parts by weight of the monomer mixture, and the heating polymerization may be performed at a temperature of about 75 °C to about 85 °C for about 40 minutes to about 80 minutes.

Such a method of preparing the acrylic emulsion pressure-sensitive adhesive composition is separated into the process of preparing the emulsion and the process of preparing the pre-emulsion, and thereafter, the simple method of mixing the pre-emulsion with the emulsion may be performed, thereby improving process stability and productivity, as compared with traditional methods of preparing an acrylic emulsion pressure-sensitive adhesive composition having a high solid content and low viscosity.

### Hydrolysis

As described above, in the emulsion polymer, that is, latex particles included in the composition according to one exemplary embodiment of the present invention, the fourth repeating unit may be derived from a hydroxy ethylene (or vinyl alcohol) monomer, and may also be formed by hydrolyzing the ethylene acetate repeating unit derived from the above-described vinyl acetate by an acid or a base.

When the fourth repeating unit is derived from hydroxy ethylene, it may be prepared by including hydroxy ethylene as one component of the monomer mixture during the above-described emulsion polymerization process.

Meanwhile, when the fourth repeating unit is formed by hydrolysis of the ethylene acetate repeating unit derived from the above-described vinyl acetate, the hydrolysis process may be further performed.

After completion of the emulsion polymerization, this hydrolysis process may proceed under acidic or basic conditions, until the amount of acetic acid resulting from the hydrolysis exceeds a certain content, e.g., about 4000 ppm or more, with respect to the latex particles, i.e., the solid content.

In this hydrolysis process, a pH value, an acid or a base for pH control, or temperature is not particularly limited. However, considering the composition of the latex particles, etc., the hydrolysis process may be preferably performed using alkali metal hydroxide at room temperature, until the amount of acetic acid exceeds a certain level.

Due to the hydrolysis process as described above, the acrylic emulsion pressure-sensitive adhesive composition according to one exemplary embodiment of the present invention may include 4000 ppm or more, or about 4000 ppm to about 18000 ppm, or about 5000 ppm to about 15000 ppm, or about 5000 ppm to about 13000 ppm of acetic acid, with respect to the weight of the emulsion polymer particles (A).

When the amount of the generated acetic acid is too large, the hydrolysis proceeds too much, and the content of the third repeating unit, i.e., the vinyl acetate-derived repeating unit in the latex particles decreases, and thus tacky/adhesive strength with respect to a member to be adhered may deteriorate. When the amount of the generated acetic acid is too small, the hydrolysis proceeds too little, and the content of the fourth repeating unit, i.e., the repeating unit represented by Chemical Formula 1 in the latex particles decreases. Accordingly, even though being impregnated with water during water-borne removal, there is a problem in that peeling is not easy.

In one exemplary embodiment of the present invention, after the polymerization step, the step of adjusting pH may be further performed.

In adjusting pH, a method commonly used in the art may be used without particular limitation. For example, alkaline substances, such as inorganic substances such as monovalent and divalent metal hydroxides, chlorides, carbonates, etc.; ammonia; organic amines, etc. may be used.

### Emulsifier

The emulsifier used in the emulsion polymerization may include one or more selected from the group consisting of anionic emulsifiers, cationic emulsifiers, and non-ionic emulsifiers.

Such an emulsifier is a material that has a hydrophilic group and a hydrophobic group at the same time, and forms a micelle structure during the emulsion polymerization process, and allows polymerization of the respective monomers inside the micelle structure.

Emulsifiers generally used in the emulsion polymerization may be divided into anionic emulsifiers, cationic emulsifiers, and non-ionic emulsifiers. A mixture of two or more of the emulsifiers may be used in view of polymerization stability in the emulsion polymerization.

Specifically, the non-ionic emulsifier may include one or more selected from the group consisting of polyethylene oxide alkyl aryl ether, polyethylene oxide alkyl amine, and polyethylene oxide alkyl ester.

Further, the anionic emulsifier may include one or more selected from the group consisting of sodium alkyl diphenyl ether disulfonate, sodium polyoxyethylene alkyl ether sulfate, sodium polyoxyethylene aryl ether sulfate, sodium alkyl sulfate, sodium alkyl benzene sulfonate, and dialkyl sodium sulfosuccinate.

These compounds may be used alone or in combination of two or more thereof, and use of a mixture of the anionic emulsifier and the non-ionic emulsifier may be more effective, but the present invention is not necessarily limited to the types of the emulsifiers.

Further, the emulsifier may be used in an amount of about 0.1 parts by weight to about 10 parts by weight, or about 1 parts by weight to about 5 parts by weight with respect to the total 100 parts by weight of the monomer components used in the preparation of the latex particles.

When the amount of the emulsifier is too large, the particle diameter of the latex particles decreases, and thus there is a problem in that the tacky/adhesive strength deteriorates. When the amount of the emulsifier is too small, there is a problem in that stability of the polymerization deteriorates during the emulsion polymerization reaction, and stability of the generated latex particles may also deteriorate.

### Solvent

According to one exemplary embodiment of the present invention, the polymerization composition may further include an aqueous solvent such as water, etc., in addition to the above-described emulsifier or monomer components.

In this regard, the aqueous solvent may be used in an amount of about 10 parts by weight to about 1,000 parts by weight with respect to 100 parts by weight of the latex particles in view of controlling stability and viscosity of the latex particles. For example, the aqueous solvent may be used such that a total solid content (TSC) is controlled to about 10% by weight to about 60% by weight, based on the total weight of the composition.

When the solvent is used in an excessively small amount, there is a problem in that viscosity of the acrylic emulsion pressure-sensitive adhesive composition increases, and stability of the latex particles deteriorates during emulsion polymerization. When the solvent is used in an excessively large amount, there is a problem in that coating property is deteriorated due to reduction of viscosity.

### Adhesive member

The acrylic emulsion pressure-sensitive adhesive composition of the present invention which is prepared according to the above-described method may be applied to adhesive members such as adhesive sheets, etc., which may be interior materials, advertising films, or adhesive films or sheets for clothing labels, but the present invention is not necessarily limited thereto.

However, considering that the acrylic pressure-sensitive adhesive composition according to one exemplary embodiment of the present invention is easily peeled off when it is impregnated with water during the water-borne removal process, it may be most preferably applied to labels for clothing or plastic containers, etc.

Such a sheet may include a substrate; and an adhesive layer formed on one side or both sides of the substrate, wherein the adhesive layer may be formed by the above-described acrylic emulsion pressure-sensitive adhesive composition.

As the substrate, polymer films such as PET, PVC, PE, PP, PS, PI, etc. may be used.

Due to the above-described characteristics of the composition, the adhesive member may have a 90 degree peel strength of about 500 gf/in or more with respect to SUS surface, as measured according to FINAT Test Method No.2 (FTM 2) standard, and may have a 90 degree peel strength of less than 250 gf/in with respect to SUS surface, as measured according to FINAT Test Method No.2 (FTM 2) standard, after being impregnated with water, specifically, for example, after being impregnated with water for 24 hours. Thus, the adhesive member may become easily removable upon being impregnated with water for water-borne removal while exhibiting excellent tacky/adhesive strength with respect to a substrate to be adhered.

Further, according to another exemplary embodiment of the present invention, the adhesive member may have a 90 degree peel strength of about 250 gf/in or more with respect to HDPE surface, as measured according to FINAT Test Method No.2 (FTM 2) standard, and may have a 90 degree peel strength of less than 130 gf/in with respect to HDPE surface, as measured according to FINAT Test Method No.2 (FTM 2) standard, after being impregnated with water, specifically, for example, after being impregnated with water for 24 hours. Thus, the adhesive member may become easily removable upon being impregnated with water for water-borne removal while exhibiting excellent tacky/adhesive strength with respect to a substrate to be adhered.

### Advantageous Effects

As described above, the acrylic emulsion pressure-sensitive adhesive composition according to one exemplary embodiment of the present invention may exhibit excellent adhesive strength with respect to a substrate to be adhered while becoming easily removable after being impregnated with water. Therefore, the acrylic emulsion pressure-sensitive adhesive composition may be easily peeled off in a water-borne removal process for plastic recycling, etc., and as a result, it may be applied to labels for plastic containers or clothing, etc.

### DETAILED DESCRIPTION OF THE EMBODIMENTS

Hereinafter, the actions and effects of the present invention will be described in more detail with reference to the specific exemplary embodiments of the present invention. However, these exemplary embodiments are for illustrative purposes only, and the scope of the present invention is not intended to be limited thereby.

### <Example>

### Emulsion polymerization

300 g of water and 10 g of a sodium alkyldiphenyloxide disulfonate solution at a concentration of 45% by weight were added to a 3 L glass reactor equipped with a thermostat, a stirrer, a dropping funnel, a nitrogen gas injection tube, and a reflux condenser, followed by stirring. The inside of the reactor was replaced with nitrogen, and then the temperature was raised to 80 °C under nitrogen atmosphere and maintained for 30 minutes.

Separately, monomers according to each composition of the following Table 1 were added to a 2 L beaker, and stirred for 30 minutes to prepare a monomer mixture (total weight of the monomers: about 600 g).

A solution consisting of 30 g of sodium polyoxyethylene lauryl ethersulfate at a concentration of 26% by weight, 5 g of a sodium alkyldiphenyl oxide disulfonate solution at a concentration of 45% by weight, 3 g of sodium carbonate, and 200 g of water was added thereto, and stirred to prepare a milky pre-emulsion.

3 g of potassium persulfate at a concentration of 20% by weight was added to the glass reactor containing the emulsion, and dissolved by stirring for 10 minutes.

The pre-emulsion and 100 g of potassium persulfate at a concentration of 2% by weight were continuously added to the glass reactor evenly for 4 hours, and polymerization was performed at 80 °C. After the addition was completed, the mixture was stirred at the same temperature for 30 minutes.

This mixture was cooled to room temperature to prepare an acrylic emulsion pressure-sensitive adhesive composition.

### Hydrolysis process

100 g of the emulsion pressure-sensitive adhesive composition prepared above was put in a glass beaker at room temperature, and a 10% aqueous sodium hydroxide solution was added until the pH value of the composition became about 6.0 or higher, followed by stirring at 300 rpm for 1 hour.

After the stirring was completed, the content of acetic acid in the composition was examined by the following method, and when the content was less than 4000 ppm, 10% aqueous sodium hydroxide solution was added again under stirring until the pH value of the composition increased to about 1.0, and the mixture was stirred in the same manner until the content of acetic acid reached 4000 ppm or more. Then, the content thereof was examined, and the results are summarized in Table 1 below.

### Examination of content of acetic acid

About 1.0 g of the pressure-sensitive adhesive composition was taken and put in a beaker, and 4 mL of acetone was added thereto. It was examined whether precipitation occurred. The mixture was centrifuged, and the supernatant was used as a sample solution for examining the content of acetic acid.

GC/FID was used in analyzing the content of acetic acid, and specific conditions are as follows.
Column: DB-WAXetr (50 m L x 0.32 mm ID, 1.0 um d.f., capillary);
Temperature : Injector (200°C), Detector (250°C);
Injection volume: about 1.0 uL

**Table 1**

| Unit: parts by weight | 2-EHA | BA | SM | Vac | MMA | HEA | AA | MAA | Acetic acid (ppm) |
|---|---|---|---|---|---|---|---|---|---|
| Example 1 | | 90 | 1 | 5 | | 2 | 2 | | 6000 |
| Example 2 | 80 | | | 7 | 12 | | 1 | | 6800 |
| Example 3 | | 70 | | 12 | 16.5 | | 1 | 0.5 | 9700 |
| Example 4 | 75 | | | 18 | 5 | | 1 | 1 | 12300 |
| Reference Example 1 | 79 | | 1 | 3.5 | 15 | 1 | 0.5 | | 3300 |
| Reference Example 2 | | 70 | | 29 | | | 1 | | 27100 |
| Reference Example 3 | 78 | | | 7 | 12 | 1 | 1 | 1 | 19500 |
| Reference Example 4 | 77 | | | 10 | 12.5 | | 0.5 | | 3900 |

| | | | | | | | | | |
|---|---|---|---|---|---|---|---|---|---|
| *2-EHA: 2-ethylhexyl acrylate; BA: butyl acrylate; SM: styrene; Vac: vinyl acetate, MMA: methyl methacrylate; HEA: hydroxyethyl acrylate; AA: acrylic acid; MAA: methacrylic acid | | | | | | | | | |

### Preparation of adhesive member

The acrylic emulsion pressure-sensitive adhesive composition prepared above was coated onto a release paper at a thickness of 18 µm, and dried at 120 °C for 1 minute, and then laminated on a PP film to prepare an adhesive member.

### Measurement of adhesive properties

### Measurement of 90 degree peel strength

For the film label specimens prepared above, a 90 degree peel strength was measured in accordance with the FINAT Test Method FTM 2.

A specimen with a size of 1 inch × 4 inch was prepared, and attached to the stainless steel surface (SUS304) and HDPE surface, and then pressed by reciprocating with a 2 kg roller at a speed of 300 mm/min twice. After aging at room temperature for 20 minutes, a peel strength was measured while peeling using a TA texture analyzer at a speed of 300 mm/min for 5 seconds.

### Water impregnation and Measurement method of adhesive properties

Each film label specimen prepared above was attached to the stainless steel surface (SUS) and HDPE surface, and then placed in a glass container containing water so that the attached specimen was immersed in 100%. Then, each specimen was put in a 60°C oven for 24 hours and then taken out, and the attached specimen was dried for 2 minutes using a nitrogen gun. While peeling each specimen in the same manner as above, a 90 degree peel strength value was measured.

The measurement results are summarized in Table 2 below.

**Table 2**

| | 90 degree peel strength (gf/in), SUS | 90 degree peel strength (gf/in), HDPE | 90 degree peel strength after impregnation (gf/in), SUS | 90 degree peel strength after impregnation (gf/in), HDPE |
|---|---|---|---|---|
| Example 1 | 590 | 290 | 230 | 110 |
| Example 2 | 640 | 340 | 180 | 100 |
| Example 3 | 710 | 300 | 160 | 80 |
| Example 4 | 510 | 260 | 130 | 70 |
| Reference Example 1 | 520 | 270 | 250 | 130 |
| Reference Example 2 | 310 | 120 | 100 | 30 |
| Reference Example 3 | 480 | 170 | 150 | 50 |
| Reference Example 4 | 600 | 320 | 290 | 150 |

Referring to Tables 1 and 2, it was confirmed that the acrylic emulsion pressure-sensitive adhesive compositions according to Examples and Reference Examples of the present invention or the adhesive members prepared by using the same had excellent peel strength values with respect to various substrates having completely different surface properties, such as SUS, HDPE, etc., while showing a remarkable reduction in the peel strength values after being immersed in water.

As in Table 2, it was clearly confirmed that Examples 1 to 4 had a 90 degree peel strength value of about 510 gf/in to about 710 gf/in with respect to SUS to exhibit very excellent adhesive strength, before being immersed in water, whereas Examples 1 to 4 had a 90 degree peel strength value of about 130 gf/in to about 230 gf/in with respect to SUS to exhibit about 20% to 40% reduction in the adhesive strength, after being immersed in water.

Further, as in Table 2, it was clearly confirmed that Examples 1 to 4 had a 90 degree peel strength value of about 260 gf/in to about 340 gf/in with respect to HDPE to exhibit very excellent adhesive strength, before being immersed in water, whereas Examples 1 to 4 had a 90 degree peel strength value of about 70 gf/in to about 110 gf/in with respect to HDPE to exhibit about 20% to 40% reduction in the adhesive strength, after being immersed in water.

Accordingly, it is believed that the acrylic emulsion pressure-sensitive adhesive composition of the present invention or the adhesive member prepared by using the same may be easily peeled off when being impregnated with water during a water-borne removal process, while being able to realize excellent tacky/adhesive properties with respect to a substrate to be adhered.

## Claims

1. An acrylic emulsion pressure-sensitive adhesive composition comprising emulsion polymer particles (A) including:
a1) a first repeating unit derived from an alkyl (meth)acrylate-based monomer,
a2) a second repeating unit derived from an unsaturated carboxylic acid-based monomer,
a3) a third repeating unit derived from vinyl acetate, and
a4) a fourth repeating unit represented by the following Chemical Formula 1:

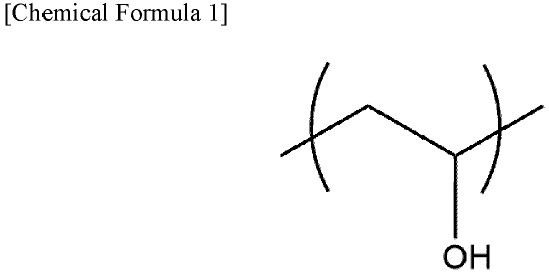

2. The acrylic emulsion pressure-sensitive adhesive composition of claim 1, wherein the alkyl (meth)acrylate-based monomer includes one or more selected from the group consisting of methyl (meth)acrylate, ethyl (meth)acrylate, propyl (meth)acrylate, isopropyl (meth)acrylate, butyl (meth)acrylate, isobutyl (meth)acrylate, t-butyl (meth)acrylate, pentyl (meth)acrylate, hexyl (meth)acrylate, heptyl (meth)acrylate, octyl (meth)acrylate, isooctyl (meth)acrylate, 2-ethylhexyl (meth)acrylate, decyl (meth)acrylate, isodecyl (meth)acrylate, dodecyl (meth)acrylate, isobornyl (meth)acrylate, and lauryl (meth)acrylate.

3. The acrylic emulsion pressure-sensitive adhesive composition of claim 1, wherein the unsaturated carboxylic acid-based monomer includes one or more selected from the group consisting of acrylic acid, methacrylic acid, fumaric acid, maleic acid, itaconic acid, citraconic acid, mesaconic acid, glutaconic acid, and allylmalonic acid.

4. The acrylic emulsion pressure-sensitive adhesive composition of claim 1, wherein the acrylic emulsion pressure-sensitive adhesive composition includes 0.1 parts by weight to 10 parts by weight of the second repeating unit with respect to 100 parts by weight of the first repeating unit.

5. The acrylic emulsion pressure-sensitive adhesive composition of claim 1, wherein the acrylic emulsion pressure-sensitive adhesive composition includes 1 parts by weight to 30 parts by weight of the third repeating unit with respect to 100 parts by weight of the first repeating unit.

6. The acrylic emulsion pressure-sensitive adhesive composition of claim 1, wherein the acrylic emulsion pressure-sensitive adhesive composition includes 0.1 parts by weight to 5 parts by weight of the fourth repeating unit with respect to 100 parts by weight of the first repeating unit.

7. The acrylic emulsion pressure-sensitive adhesive composition of claim 1, wherein the emulsion polymer particles (A) further include a fifth repeating unit derived from any one or more monomers of a hydroxy alkyl (meth)acrylate-based monomer and an aromatic vinylic monomer.

8. The acrylic emulsion pressure-sensitive adhesive composition of claim 7, wherein the hydroxy alkyl (meth)acrylate-based monomer includes one or more selected from the group consisting of hydroxyethyl (meth)acrylate, hydroxypropyl (meth)acrylate, and hydroxybutyl (meth)acrylate.

9. The acrylic emulsion pressure-sensitive adhesive composition of claim 7, wherein the aromatic vinylic monomer includes one or more selected from the group consisting of styrene, methylstyrene, ethylstyrene, butylstyrene, chlorostyrene, methyl vinyl benzoate, vinylnaphthalene, chloromethylstyrene, and divinylbenzene.

10. The acrylic emulsion pressure-sensitive adhesive composition of claim 1, wherein the acrylic emulsion pressure-sensitive adhesive composition includes 4000 ppm or more of acetic acid with respect to a weight of the emulsion polymer particles (A).

11. An adhesive member comprising:
a substrate; and
an adhesive layer which is formed on at least one surface of the substrate,
wherein the adhesive layer includes the acrylic emulsion pressure-sensitive adhesive composition of claim 1.

12. The adhesive member of claim 11, wherein the adhesive member has a 90 degree peel strength of 500 gf/in (0.1930 N/mm) or more with respect to SUS surface, as measured according to FINAT Test Method No.2 (FTM 2) standard, and has a 90 degree peel strength of less than 250 gf/in (0.0965 N/mm) with respect to the SUS surface, as measured according to the FINAT Test Method No.2 (FTM 2) standard, after being impregnated with water.

13. The adhesive member of claim 11, wherein the adhesive member has a 90 degree peel strength of 250 gf/in (0.0965 N/mm) or more with respect to HDPE surface, as measured according to FINAT Test Method No.2 (FTM 2) standard, and has a 90 degree peel strength of less than 130 gf/in (0.0501 N/mm) with respect to the HDPE surface, as measured according to the FINAT Test Method No.2 (FTM 2) standard, after being impregnated with water.

14. A method of preparing an acrylic emulsion pressure-sensitive adhesive composition, comprising:
forming emulsion polymer particles (A) by performing emulsion polymerization of a monomer mixture including an alkyl (meth)acrylate-based monomer, an unsaturated carboxylic acid-based monomer, and a vinyl acetate in the presence of an emulsifier; and
hydrolyzing vinyl acetate-derived residues by leaving the emulsion polymer particles under acidic or basic conditions.

15. The acrylic emulsion pressure-sensitive adhesive composition of claim 1, wherein the acrylic emulsion pressure-sensitive adhesive composition includes 4000 ppm to 18000 ppm of acetic acid with respect to a weight of the emulsion polymer particles (A).

16. The adhesive member of claim 11, wherein the adhesive member has a 90 degree peel strength of 500 gf/in to 1000 gf/in) (0.1930 to 0.3860 N/mm) with respect to SUS surface, as measured according to FINAT Test Method No.2 (FTM 2) standard, and has a 90 degree peel strength of 100 gf/in to 250 gf/in (0.0386 to 0.0965 N/mm) with respect to the SUS surface, as measured according to the FINAT Test Method No.2 (FTM 2) standard, after being impregnated with water.

17. The adhesive member of claim 11, wherein the adhesive member has a 90 degree peel strength of 250 gf/in to 400 gf/in) (0.0965 to 0.1544 N/mm) with respect to HDPE surface, as measured according to FINAT Test Method No.2 (FTM 2) standard, and has a 90 degree peel strength of 50 gf/in to130 gf/in (0.0193 to 0.0501 N/mm) with respect to the HDPE surface, as measured according to the FINAT Test Method No.2 (FTM 2) standard, after being impregnated with water.

## Patentansprüche

1. Druckempfindliche Haftklebstoffzusammensetzung aus Acrylemulsion, die Emulsionspolymerteilchen (A) umfasst, einschließend:
a1) eine erste Wiederholungseinheit, die von einem Monomer auf Basis von Alkyl(meth)acrylat abgeleitet ist,
a2) eine zweite Wiederholungseinheit, die von einem Monomer auf Basis von ungesättigter Carbonsäure abgeleitet ist,
a3) eine dritte Wiederholungseinheit, die von Vinylacetat abgeleitet ist, und
a4) eine vierte Wiederholungseinheit, die durch die folgende chemische Formel 1 dargestellt ist.

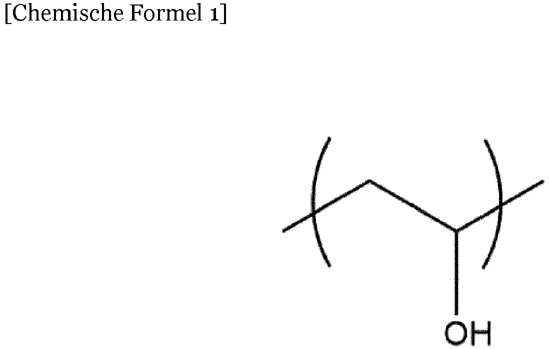

2. Druckempfindliche Haftklebstoffzusammensetzung aus Acrylemulsion nach Anspruch 1, wobei das Monomer auf Basis von Alkyl(meth)acrylat eines oder mehrere einschließt, ausgewählt aus der Gruppe bestehend aus Methyl(meth)acrylat, Ethyl(meth)acrylat, Propyl(meth)acrylat, Isopropyl(meth)acrylat, Butyl(meth)acrylat, Isobutyl(meth)acrylat, t-Butyl(meth)acrylat, Pentyl(meth)acrylat, Hexyl(meth)acrylat, Heptyl(meth)acrylat, Octyl(meth)acrylat, Isooctyl(meth)acrylat, 2-Ethylhexyl-(meth)acrylat, Decyl(meth)acrylat, Isodecyl(meth)acrylat, Dodecyl-(meth)acrylat, Isobornyl(meth)acrylat, und Lauryl(meth)acrylat.

3. Druckempfindliche Haftklebstoffzusammensetzung aus Acrylemulsion nach Anspruch 1, wobei das Monomer auf Basis von ungesättigter Carbonsäure eines oder mehrere einschließt, ausgewählt aus der Gruppe bestehend aus Acrylsäure, Methacrylsäure, Fumarsäure, Maleinsäure, Itaconsäure, Citraconsäure, Mesaconsäure, Glutaconsäure und Allylmalonsäure.

4. Druckempfindliche Haftklebstoffzusammensetzung aus Acrylemulsion nach Anspruch 1, wobei die druckempfindliche Haftklebstoffzusammensetzung aus Acrylemulsion 0,1 Gewichtsteile bis 10 Gewichtsteile der zweiten Wiederholungseinheit in Bezug auf 100 Gewichtsteile der ersten Wiederholungseinheit einschließt.

5. Druckempfindliche Haftklebstoffzusammensetzung aus Acrylemulsion nach Anspruch 1, wobei die druckempfindliche Haftklebstoffzusammensetzung aus Acrylemulsion 1 Gewichtsteile bis 30 Gewichtsteile der dritten Wiederholungseinheit in Bezug auf 100 Gewichtsteile der ersten Wiederholungseinheit einschließt.

6. Druckempfindliche Haftklebstoffzusammensetzung aus Acrylemulsion nach Anspruch 1, wobei die druckempfindliche Haftklebstoffzusammensetzung aus Acrylemulsion 0,1 Gewichtsteile bis 5 Gewichtsteile der vierten Wiederholungseinheit in Bezug auf 100 Gewichtsteile der ersten Wiederholungseinheit einschließt.

7. Druckempfindliche Haftklebstoffzusammensetzung aus Acrylemulsion nach Anspruch 1, wobei die Emulsionspolymerteilchen (A) ferner eine fünfte Wiederholungseinheit einschließen, die von einem oder mehreren Monomeren von Monomeren auf Basis von Hydroxyalkyl(meth)acrylat und einem aromatischen Vinylmonomer abgeleitet ist.

8. Druckempfindliche Haftklebstoffzusammensetzung aus Acrylemulsion nach Anspruch 7, wobei das Monomer auf Basis von Hydroxyalkyl(meth)acrylat eines oder mehrere einschließt, ausgewählt aus der Gruppe bestehen aus Hydroxyethyl(meth)acrylat, Hydroxypropyl(meth)acrylat und Hydroxybutyl(meth)acrylat.

9. Druckempfindliche Haftklebstoffzusammensetzung aus Acrylemulsion nach Anspruch 7, wobei das aromatische Vinylmonomer eines oder mehrere einschließt, ausgewählt aus der Gruppe bestehend aus Styrol, Methylstyrol, Ethylstyrol, Butylstyrol, Chlorstyrol, Methylvinylbenzoat, Vinylnaphthalen, Chormethylstyrol und Divinylbenzol.

10. Druckempfindliche Haftklebstoffzusammensetzung aus Acrylemulsion nach Anspruch 1, wobei die druckempfindliche Haftklebstoffzusammensetzung aus Acrylemulsion 4.000 ppm oder mehr Essigsäure in Bezug auf ein Gewicht der Emulsionspolymerteilchen (A) einschließt.

11. Haftklebstoffelement, umfassend:
ein Substrat; und
eine Haftschicht, die auf wenigstens einer Oberfläche des Substrats gebildet ist, wobei die Haftschicht die druckempfindliche Haftklebstoffzusammensetzung aus Acrylemulsion nach Anspruch 1 einschließt.

12. Haftklebstoffelement nach Anspruch 11, wobei das Haftklebstoffelement eine Abziehfestigkeit bei 90 Grad von 500 gf/in (0,1930 N/mm) oder mehr in Bezug auf SUS-Oberfläche aufweist, wie gemessen gemäß FINAT-Testverfahren Nr. 2 (FTM 2), Standard, und eine Abziehfestigkeit bei 90 Grad von weniger als 250 gf/in (0,0965 N/mm) in Bezug auf die SUS-Oberfläche aufweist, gemessen gemäß dem FINAT-Testverfahren Nr. 2 (FTM 2), Standard, nachdem es mit Wasser imprägniert ist.

13. Haftklebstoffelement nach Anspruch 11, wobei das Haftklebstoffelement eine Abziehfestigkeit bei 90 Grad von 250 gf/in (0,0965 N/mm) oder mehr in Bezug auf HDPE-Oberfläche aufweist, gemessen gemäß FINAT-Testverfahren Nr. 2 (FTM 2), Standard, und eine Abziehfestigkeit bei 90 Grad von weniger als 130 gf/in (0,0501 N/mm) in Bezug auf die HDPE-Oberfläche aufweist, gemessen gemäß dem FINAT-Testverfahren Nr. 2 (FTM 2), Standard, nachdem es mit Wasser imprägniert ist.

14. Verfahren zum Herstellen einer druckempfindlichen Haftklebstoffzusammensetzung aus Acrylemulsion, umfassend:
Bilden von Emulsionspolymerteilchen (A) durch Durchführen einer Emulsionspolymerisation einer Monomermischung einschließend ein Monomer auf Basis von Alkyl(meth)acrylat, ein Monomer auf Basis von ungesättiger Carbonsäure und ein Vinylacetat in der Gegenwart eines Emulgators; und
Hydrolysieren Vinylacetat-abgeleiteter Reste durch Belassen der Emulsionspolymerteilchen unter sauren oder basischen Bedingungen.

15. Druckempfindliche Haftklebstoffzusammensetzung aus Acrylemulsion nach Anspruch 1, wobei die druckempfindliche Haftklebstoffzusammensetzung aus Acrylemulsion 4.000 ppm bis 18.000 ppm Essigsäure in Bezug auf ein Gewicht der Emulsionspolymerteilchen (A) einschließt.

16. Haftklebstoffelement nach Anspruch 11, wobei das Haftklebstoffelement eine Abziehfestigkeit bei 90 Grad von 500 gf/in bis 1.000 gf/in (0,1930 bis 0,3860 N/mm) in Bezug auf SUS-Oberfläche aufweist, gemessen gemäß FINAT-Testverfahren Nr. 2 (FTM 2) Standard, und eine Abziehfestigkeit bei 90 Grad von 100 gf/in bis 250 gf/in (0,0386 bis 0,0965 N/mm) in Bezug auf die SUS-Oberfläche aufweist, gemessen gemäß dem FINAT-Testverfahren Nr. 2 (FTM 2), Standard, nachdem es mit Wasser imprägniert ist.

17. Haftklebstoffelement nach Anspruch 11, wobei das Haftklebstoffelement eine Abziehfestigkeit bei 90 Grad von 250 gf/in bis 400 gf/in (0,0965 bis 0,1544 N/mm) in Bezug auf HDPE-Oberfläche aufweist, gemessen gemäß FINAT-Testverfahren Nr. 2 (FTM 2) Standard, und eine Abziehfestigkeit bei 90 Grad von 50 gf/in bis 130 gf/in (0,0193 bis 0,0501 N/mm) in Bezug auf die HDPE-Oberfläche aufweist, gemessen gemäß dem FINAT-Testverfahren Nr. 2 (FTM 2), Standard, nachdem es mit Wasser imprägniert ist.

## Revendications

1. Composition adhésive sensible à la pression en émulsion acrylique comprenant des particules de polymère en émulsion (A) contenant :
a1) un premier motif récurrent dérivé d'un monomère à base de (méth)acrylate d'alkyle,
a2) un deuxième motif récurrent dérivé d'un monomère à base d'acide carboxylique insaturé,
a3) un troisième motif récurrent dérivé de l'acétate de vinyle, et
a4) un quatrième motif récurrent représenté par la formule chimique 1 suivante :

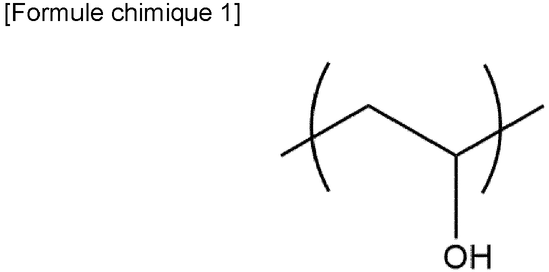

2. Composition adhésive sensible à la pression en émulsion acrylique selon la revendication 1, dans laquelle le monomère à base de (méth)acrylate d'alkyle contient un ou plusieurs monomère(s) sélectionné(s) dans le groupe constitué de (méth)acrylate de méthyle, de (méth)acrylate d'éthyle, de (méth)acrylate de propyle, de (méth)acrylate d'isopropyle, de (méth)acrylate de butyle, de (méth)acrylate d'isobutyle, de (méth)acrylate de t-butyle, de (méth)acrylate de pentyle, de (méth)acrylate d'hexyle, de (méth)acrylate d'heptyle, de (méth)acrylate d'octyle, de (méth)acrylate d'isooctyle, de (méth)acrylate de 2-éthylhexyle, de (méth)acrylate de décyle, de (méth)acrylate d'isodécyle, de (méth)acrylate de dodécyle, de (méth)acrylate d'isobornyle et de (méth)acrylate de lauryle.

3. Composition adhésive sensible à la pression en émulsion acrylique selon la revendication 1, dans laquelle le monomère à base d'acide carboxylique insaturé contient un ou plusieurs monomère(s) sélectionné(s) dans le groupe constitué d'acide acrylique, d'acide méthacrylique, d'acide fumarique, d'acide maléique, d'acide itaconique, d'acide citraconique, d'acide mésaconique, d'acide glutaconique et d'acide allylmalonique.

4. Composition adhésive sensible à la pression en émulsion acrylique selon la revendication 1, ladite composition adhésive sensible à la pression à base d'émulsion acrylique contenant de 0,1 partie en poids à 10 parties en poids du deuxième motif récurrent par rapport à 100 parties en poids du premier motif récurrent.

5. Composition adhésive sensible à la pression en émulsion acrylique selon la revendication 1, ladite composition adhésive acrylique sensible à la pression en émulsion acrylique contenant 1 partie en poids à 30 parties en poids du troisième motif récurrent par rapport à 100 parties en poids du premier motif récurrent.

6. Composition adhésive sensible à la pression en émulsion acrylique selon la revendication 1, ladite composition adhésive sensible à la pression en émulsion acrylique contient 0,1 partie en poids à 5 parties en poids du quatrième motif récurrent par rapport à 100 parties en poids du premier motif récurrent.

7. Composition adhésive sensible à la pression en émulsion acrylique selon la revendication 1, dans laquelle les particules de polymère en émulsion (A) contiennent en outre un cinquième motif récurrent dérivé d'un ou de plusieurs monomères d'un monomère à base d'hydroxyalkyle (méth)acrylate et d'un monomère vinylique aromatique.

8. Composition adhésive sensible à la pression en émulsion acrylique selon la revendication 7, dans laquelle le monomère à base de (méth)acrylate d'alkyle hydroxy contient un ou plusieurs monomères sélectionné(s) dans le groupe constitué de (méth)acrylate d'hydroxyéthyle, de (méth)acrylate d'hydroxypropyle et de (méth)acrylate d'hydroxybutyle.

9. Composition adhésive sensible à la pression en émulsion acrylique selon la revendication 7, dans laquelle le monomère vinylique aromatique contient un ou plusieurs monomères sélectionné(s) dans le groupe constitué de styrène, de méthylstyrène, d'éthylstyrène, de butylstyrène, de chlorostyrène, de benzoate de méthyle et de vinyle, de vinylnaphtalène, de chlorométhylstyrène et de divinylbenzène.

10. Composition adhésive sensible à la pression en émulsion acrylique selon la revendication 1, la composition adhésive sensible à la pression en émulsion acrylique contenant 4000 ppm ou plus d'acide acétique par rapport à un poids des particules de polymère en émulsion (A).

11. Membre adhésif comprenant :
un substrat ; et
une couche adhésive formée sur au moins une surface du substrat,
dans lequel la couche adhésive contient la composition adhésive sensible à la pression en émulsion acrylique selon la revendication 1.

12. Membre adhésif selon la revendication 11, le membre adhésif ayant une résistance au pelage à 90 degrés de 500 gf/po (0,1930 N/mm) ou supérieure par rapport à la surface en acier inoxydable (SUS), telle que mesurée par la méthode de test standard FINAT n° 2 (FTM 2), et ayant une résistance au pelage à 90 degrés inférieure à 250 gf/po (0,0965 N/mm) par rapport à la surface en acier inoxydable (SUS), telle que mesurée par la méthode de test standard FINAT n° 2 (FTM 2), après avoir été imprégnée d'eau.

13. Membre adhésif selon la revendication 11, le membre adhésif ayant une résistance au pelage à 90 degrés de 250 gf/po (0,0965 N/mm) ou supérieure par rapport à la surface en polyéthylène de haute densité (PEHD), telle que mesurée par la méthode de test standard FINAT n° 2 (FTM 2), et ayant une résistance au pelage à 90 degrés de moins de 130 gf/po (0,0501 N/mm) par rapport à la surface en PEHD, telle que mesurée par la méthode de test standard FINAT n° 2 (FTM 2), après avoir été imprégnée d'eau.

14. Procédé de préparation d'une composition adhésive sensible à la pression en émulsion acrylique, comprenant les étapes consistant à :
former des particules de polymère en émulsion (A) en effectuant une polymérisation en émulsion d'un mélange de monomères comprenant un monomère à base de (méth)acrylate d'alkyle, un monomère à base d'acide carboxylique insaturé et un acétate de vinyle en présence d'un émulsifiant ; et
hydrolyser les résidus dérivés de l'acétate de vinyle en laissant les particules de polymère en émulsion dans des conditions acides ou basiques.

15. Composition adhésive sensible à la pression en émulsion acrylique selon la revendication 1, la composition adhésive sensible à la pression en émulsion acrylique comprenant 4000 ppm à 18000 ppm d'acide acétique par rapport au poids des particules de polymère en émulsion (A).

16. Membre adhésif selon la revendication 11, le membre adhésif ayant une résistance au pelage à 90 degrés de 500 gf/po 1000 gf/po (0,1930 à 0,3860 N/mm) par rapport à la surface en acier inoxydable (SUS), telle que mesurée par la méthode de test standard FINAT n° 2 (FTM 2), et ayant une résistance au pelage à 90 degrés de 100 gf/po à 250 gf/po (0,0386 à 0,0965 N/mm) par rapport à la surface en acier inoxydable (SUS), telle que mesurée par la méthode de test standard FINAT n° 2 (FTM 2), après avoir été imprégnée d'eau.

17. Membre adhésif selon la revendication 11, le membre adhésif ayant une résistance au pelage à 90 degrés de 250 gf/po à 400 gf/in (0,0965 à 0,1544 N/mm) par rapport à la surface en PEHD, telle que mesurée par la méthode de test standard FINAT n° 2 (FTM 2), et ayant une résistance au pelage à 90 degrés de 50 gf/po à 130 gf/po (0,01993 à 0,0501 N/mm) par rapport à la surface en PEHD, telle que mesurée par la méthode de test standard FINAT n° 2 (FTM 2), après avoir été imprégnée d'eau.
